Europäisches Patentamt

(19) European Patent Office   (11) Publication number: **0 015 674**

Office européen des brevets                                        **B1**

(12) **EUROPEAN PATENT SPECIFICATION**

(45) Date of publication of patent specification: **23.05.84**   (51) Int. Cl.³: **F 16 D 41/06,** F 16 D 41/08, F 16 D 15/00

(21) Application number: **80300451.4**

(22) Date of filing: **15.02.80**

(54) Spiral type one-way clutch mechanism and a clutch assembly comprising the mechanism.

(30) Priority: **20.02.79 CA 321941**
**11.02.80 CA 321941**

(43) Date of publication of application:
**17.09.80 Bulletin 80/19**

(45) Publication of the grant of the patent:
**23.05.84 Bulletin 84/21**

(84) Designated Contracting States:
**AT BE CH DE FR GB IT LU NL SE**

(56) References cited:
**DE-B-1 625 807**
**DE-C- 907 228**
**DE-C- 938 887**
**FR-A- 659 677**
**FR-A-1 005 049**
**US-A-1 453 548**
**US-A-1 618 915**
**US-A-2 113 512**
**US-A-2 785 782**
**US-A-3 107 764**
**US-A-3 202 250**

(73) Proprietor: **KER-TRAIN SYSTEMS LIMITED**
**3005-65 Harbour Square**
**Toronto Ontario M5J 2L4 (CA)**

(72) Inventor: **Kerr, John Hugh**
**Box 40 Treasure Island R.R. No. 1**
**Kingston, Ontario, K7L 4VI (CA)**

(74) Representative: **Hartley, David et al**
**c/o Withers & Rogers 4 Dyer's Buildings Holborn**
**London, EC1N 2JT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a spiral type one-way clutching mechanism.

One-way clutches presently in existence include sprag, friction wedge, and roller ramp type, which generally consist of a plurality of individually activated jamming-elements that are radially located between the concentric, clutching members.

Risinger, in United States Patent No. 524,652 patented August 14, 1899, provided a bicycle including an intermittent grip mechanism including three distinct crescent shaped wedges disposed concentric to, but outboard of a ratchet portion, with a series of rollers interposed between the opposing edges of the wedges and the ratchet faces to facilitate movement of the wedges.

Constantinesco, in United States Patent No. 1,618,915 patented February 22, 1927, provided a unidirectional driving device including an annular rotor; a concentrically disposed series of separate wedge-shaped crescent members; and elastic roller bearings disposed in the space between the rotor and the wedge-shaped members.

Ollagnon et al in French Patent No. 891,793 patented March 20, 1944 disclosed a one-way clutching mechanism including an annular outer race composed of a plurality of wedge-shaped crescent elements, an inner race composed of a plurality of wedge-shaped crescent elements, with rollers disposed between the outer race and the inner race.

Dodge, in United States Patent No. 2,785,782 patented March 19, 1957, provided a wedge type one-way clutch including an annular outer race, an inner race and a plurality of outer wedge/inner wedge crescent elements disposed therebetween, with each outer wedge/inner wedge crescent element including a plurality of cylindrical rollers therebetween.

Fulton, in United States Patent No. 3,202,250 patented August 21, 1965, provided an annular outer race, a cylindrical inner race, and a spiral wedge acting as a gripping member, with a surface coating of low friction material between the spiral wedge and the outer race.

The clutching mechanisms disclosed in the above-discussed prior art patents have some or all of the following operating characteristics: (a) uniform distribution of the clutching load depends on identical kinematic response of the jamming-elements; (b) transverse forces, such as those caused by a simultaneous rotation of the geometric axis of the clutch assembly around a second axis, increase the disarray in the response to the jamming-elements; and (c) the critically shaped surfaces of the jamming-elements can be subject to frictional wear when in the overrunning mode.

A spiral type one way clutch is known (see particularly U.S. 3,202,250) which includes an annular outer body member having an inner spiral surface having at least one spiral segment defining an axially oriented opening through the outer body member a concentrically mounted, inner body member having an outer spiral surface having at least one spiral segment, the inner and outer spiral surfaces defining a spiral race therebetween, the outer body member and the inner body member both being monolithic and being relatively rotatably oscillatable with respect to each other wherein the outer surface of spiral configuration of the inner body member is tangentially congruent to the inner spiral surface of the outer body member and resilient means are provided for acting between the inner body member and the outer body member for limiting relative oscillatory movement therebetween.

We propose, in accordance with the present invention a spiral type one-way clutch of the kind referred to, characterised in that a plurality of axially oriented rollable wedging members contact both the inner and the outer spiral surfaces, one end of said spiral race has an inner abutment provided by a radially outwardly extending protrusion or flange on said inner body member, the other end of said spiral race defined in part by said inner spiral surface has an outer abutment provided by a radially inwardly directed protrusion on said outer body member; and said plurality of axially oriented rollable wedging members substantially but not completely fill said spiral race, said roller members are adapted to abut, either directly or via the resilient means, said inner abutment and said outer abutment when free wheeling; and at least one of the inner body member or the outer body member has a radially directed slit extending therethrough.

By this invention, a clutching mechanism is provided that (a) substantially eliminates the role of chance in establishing the clutching load distribution between its members, (b) makes it substantially insensitive to transverse forces, (c) substantially eliminates overrunning frictional wear on the critically shaped surfaces of its members, and (d) provides a means whereby the clutching mode can be selected to be either active or passive.

Other features of the present invention are set forth in the appendant claims.

Several embodiments of the present invention will now be described by way of example with reference to the accompanying drawings, in which:

Figure 1 is an exploded view of a spiral type one-way clutching mechanism of one embodiment of this invention;

Figure 2 is an exploded view of a spiral type one-way clutching mechanism of another embodiment of this invention;

Figure 3 is a cross-section of a spiral type one-way clutching mechanism of yet another embodiment of this invention;

Figure 4 is a cross-section of a spiral type one-way clutching mechanism of still another embodiment of this invention;

Figure 5 is a cross-section of a spiral type one-way clutching mechanism of yet another embodiment of this invention;

Figure 6 is a cross-section of a spiral type one-way clutching mechanism of still another embodiment of this invention;

Figure 7 is a cross-section of a one-way clutch of a still further embodiment of this invention incorporating a spiral type one-way clutching mechanism of this invention;

Figure 8 is a cross-section of a one-way clutch of a still further embodiment of this invention incorporating a spiral type one-way clutch mechanism of this invention; and

Figure 9 is a schematic illustration showing the geometry associated with the spirals embodied on the adjacent surfaces of the inner and outer body members of all clutch assemblies.

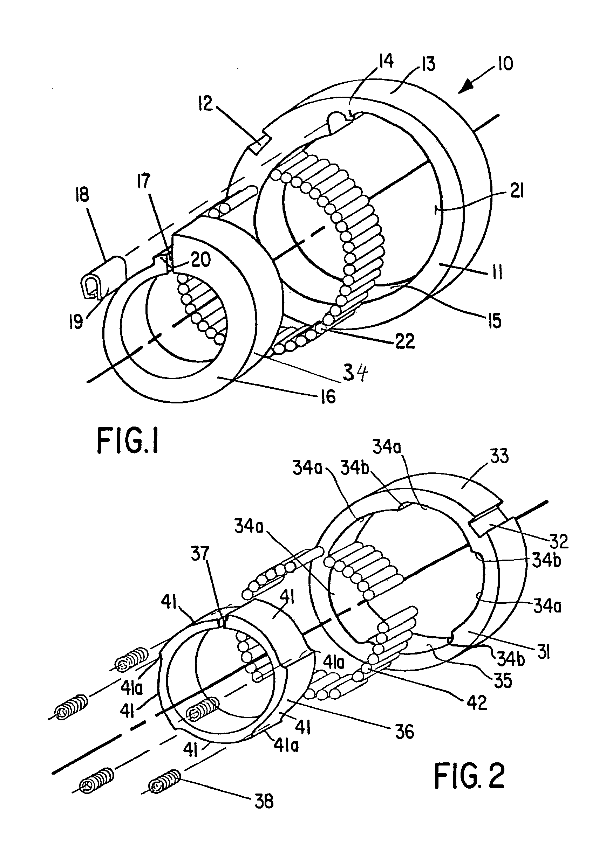

As seen in Figure 1, a spiral type one-way clutching mechanism 10 includes a monolithic annular outer body member 11 having a keyway 12 set into its outer cylindrical surface 13, and an indent 14 in its spiral surface 15.

Disposed within monolithic annular outer member 11 is a monolithic annular inner body member 16 provided with a radial slit 17. A U-shaped limit spring 18 is disposed with one edge 19 against an end 20 of the slit 17, and with its "U" disposed in indent 14. The U-shaped limit spring 18 is only one means acting between the body members to limit relative oscillator movement therebetween. One alternative way is to provide a very accurate gap between the two body members. Another way is to provide a mass of elastic material, e.g., rubber, between the two body members.

The adjacent surfaces of the outer body member 11 and the inner body member 16 define a single spiral coil race 21 in which the opposed surfaces are tangentially congruent to each other. A plurality of wedgeable roller members, e.g., ball bearings or preferably right cylindrical roller bearings 22 are evenly spaced in, and substantially fill, race 21.

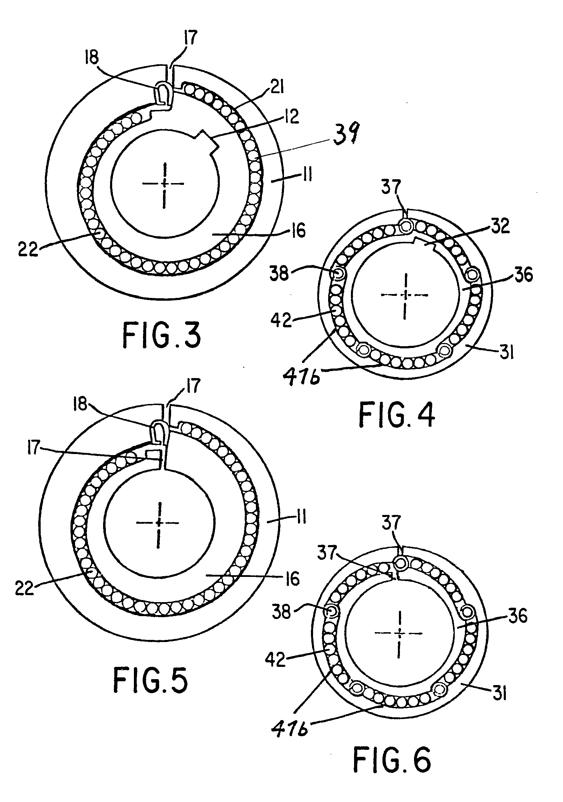

The embodiment of Figure 3 is substantially the same as the embodiment of Figure 1. Insofar as parts are identical, they will not be described further. The difference resides in the provision of the keyway 12 being disposed in the inner cylindrical surface of the inner body member 16, and in that the outer body member 11 is provided with the radial slit 17.

The embodiment of Figure 5 is substantially the same as the embodiments of Figures 1 and 3. Insofar as parts are identical, they will not be described further. The difference resides in the omission of the keyway 12 and in the provision of a radial slit 17 in each of the outer body member 11 and the inner body member 16.

The embodiment of Figure 2 includes a monolithic, annular outer member 31 having a keyway 32 set into its outer cylindrical surface 33. The inner surface 35 is provided by a plurality, in this case five spiral segments 34a, each terminating in an outwardly curved stop portion 34b.

Disposed within outer member 31 is a monolithic, annular inner member 36 provided with a radial slit 37. A plurality of helical limit springs 38 (in this case five) are disposed, one each adjacent a respective outwardly curved stop portion 34b. The helical limit springs 38 are only one means acting between the body members to limit relative oscillatory movement therebetween. Another way is to provide an elastic cylindrical mass, e.g., a rubber cylinder, between the body members adjacent a respective outwardly curved stop portion 34b.

The adjacent surfaces of the outer body member 31 and the inner body member 36 define a plurality (in this case five) spiral shaped segments 41, each spiral segment ending in an outwardly round portion 41a. A plurality of wedgeable roller members, e.g., right cylindrical roller bearings 42, are evenly spaced in, and substantially completely fill, the races 41b between spiral segments 34a and spiral shaped segments 41.

The embodiment of Figure 4 is substantially the same as the embodiment of Figure 2. Insofar as parts are identical, they will not be described further. The difference resides in the provision of a keyway 32 in the inner cylindrical surface of the inner body member 36, and in that the outer body member 31 is provided with the radial slit 37.

The embodiment of Figure 6 is substantially the same as the embodiment of Figures 2 and 4. Insofar as parts are identical, they will not be described further. The difference resides in the omission of the keyway 32, and in the provision of a radial slit 37 in each of the outer body member 31 and the inner body member 36.

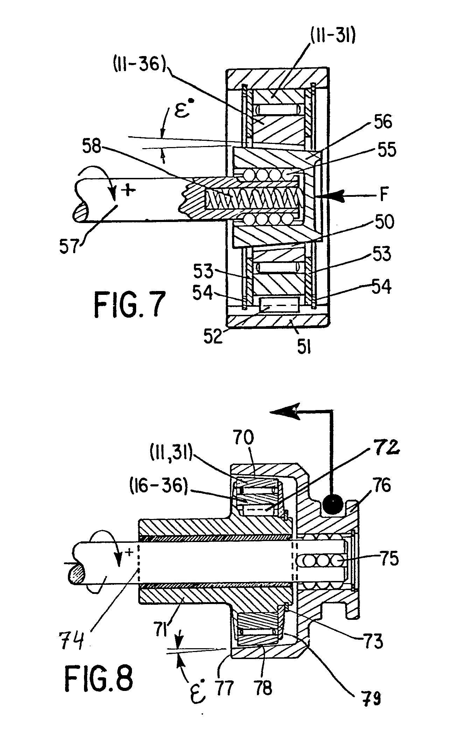

The spiral type one-way clutching mechanism shown in the spiral type one-way clutch assembly of Figure 7 may be that of Figures 1 or 2, or by suitable modification for interconnection, that of Figures 5 or 6. The inner cylindrical surface of the inner body member 16, 36 is modified to provide an inner right conical surface 50. The outer body member 11, 31 is keyed to the stationary member 51 by key 52. If the clutching mechanism is that of Figures 5 or 6, the outer body members 11, 31 are free to overrun but can be actuated to engage. Two end plates 53 and circlips 54 prevent axial movement of the clutching mechanism. Shaft 57 is provided with an axial ball-spline 55, through which axially movable member 56 is attached to the shaft 57. The cone angle $\Sigma$ is a specification of the conical surfaces of both the inner body member and the outer body member of the clutching mechanism. Spring 58 is a compressive member.

The spiral type one-way clutching mechanism shown in the spiral type one-way clutch assembly of Figure 8 may be either that of Figures 3 or 4, or by suitable modification for interconnection, that of Figures 5 or 6. The outer cylindrical surface of the outer body member 11, 31 is provided with an outer right conical surface 70. The inner body member 16, 36 is keyed to the stationary member 71 by the key 72, with the inner body member 16, 36 of the clutch of Figures 5 and 6, free to overrun on the stationary member 71 but which can be actuated to engage. End plate 79 and circlip 73 prevent axial movement of the clutch assembly. Shaft 74 is provided with an axial ball-spline 75 through which axially movable member 76 is attached. Axially movable member 76 includes a dished face 77 with a conical surface 78 thereon. The cone angle $\Sigma$ is a specification of the conical surfaces of both the inner body member and the outer body member of the clutching mechanism.

Description of the operation of the invention

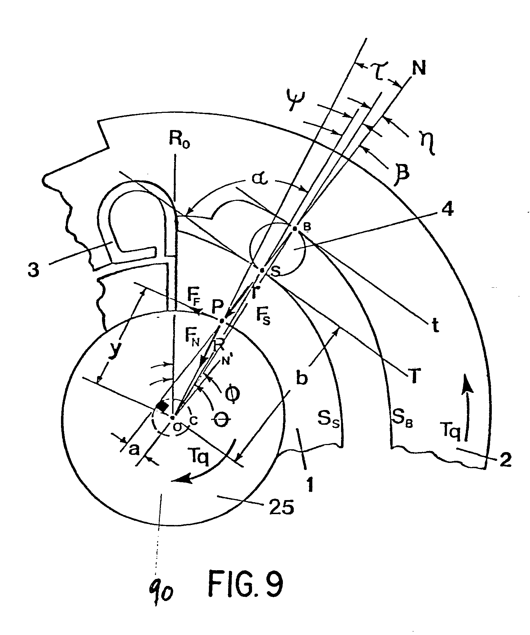

Before discussing the operation of the embodiments of the invention, it is desired to explain the theory of operation with reference to Figure 9.

Figure 9 is a partial elevation of the clutch assembly of Figure 1 showing: the geometry associated with the spirals $S_s$ and $S_B$ respectively embodied on the adjacent surfaces of the inner body member 16 and the outer body member 11; their relative relationship to the single roller 4 and to the geometry center O of the assembly; and the lines of action of the vector forces $F_f$, $F_n$, and $F_s$ at the point P on the congruous surfaces of the inner body member 16 and adaptable shaft 90.

The magnitude of the strut force $F_s$ through the roller, which is caused by the transfer of torque from the shaft 90 to the outer body member 11, is determined by the relationship:

$$F_s = \frac{t_q}{a} \qquad (1)$$

where:
a is the perpendicular distance between the line of action of the strut force $F_s$ and the center O, and

$t_q$ is that portion of the total clutching torque $T_q$ that is transferred through the single roller shown.

The required value of the angle $\tau$ to ensure no slippage between the slipper and shaft is determined by the following analysis:

$$F_f = \mu \cdot F_n \qquad (2)$$

where:
$F_f$=the frictional force between the slipper and shaft

$F_n$=the normal force to the congruous surfaces of the slipper and shaft at the point P

$\mu$—the coefficient of friction between the slipper and shaft; however:

$$F_n = F_s \cos(\tau) \qquad (3)$$

therefore:

$$F_f = \mu F_s \cos(\tau) \qquad (4)$$

The following relationship is also true:

$$F_f = \frac{t_q}{y} \qquad (5)$$

where:
y is the radius of the shaft.

By combining equations 1, 4, and 5, the following relationship is obtained:

$$\cos(\tau) = \frac{a}{y} \cdot \frac{1}{\mu} \qquad (6)$$

however:

$$\frac{a}{y} = \sin(\tau)$$

therefore:

$$\tan(\tau) = \mu \qquad (7)$$

Since the coefficient of friction $\mu$ is a constant for any given set of conditions that exist between the congruous surfaces of the slipper and shaft, equation (7) specifies the maximum angle between the line of action through any roller member and the normal to the congruous surfaces of the slipper and shaft to prevent slippage. Further, since:

$$\Sigma(F_s \cdot a)N = T_q \qquad (8)$$

where:
N is the number of rollers,

it follows that if the strut force $F_s$ is to be kept constant through all roller members, then a and $\tau$ must also be constant, and the parallel spirals $S_s$ and $S_B$ must be specified accordingly.

In the system of polar coordinates a plane spiral is specified by an equation that expresses the relationship between the radius vector R, and the relative angle of rotation $\theta$ of the vector, where:

$$R = f(\theta) \qquad (9)$$

The direction of the tangent T to the spiral $S_s$ is determined by the angle $\alpha$ between the tangent and the radius vector R at its point of contact s, and is determined by the relationship:

$$\tan \alpha = \frac{R}{dR/d\theta} \qquad (10)$$

The angle $\beta$, between the perpendicular N to the tangent T at the point s, and the radius vector R, is determined by the relationship:

$$\beta = 90° - \alpha \qquad (11)$$

Since, the line of action of the vector force $F_s$ if both tangent to the circle C and normal to the spiral $S_s$, and the maximum ratio of "a" and the radius of the shaft y is specified by equation (7), a general trancendental equation specifying the relationship between R, a, and $\theta$ may be obtained from equation (10) where:

$$\tan \alpha = \frac{a}{b} = \frac{a}{R^2 - a^2}$$

giving

$$\frac{R^2 - a^2}{Ra} aR = d\theta$$

which when integrated gives

$$\sqrt{R^2 - a^2} - a \, Cos^{-1}\left(\frac{a}{r}\right) - a\,\theta + k_1 = 0$$

When "a" is a constant the trajectory of the point s is in face the involute of the circle C, and $k_1$ may be solved by putting $\theta = 0$, and $R = R_0$.

The parallel spiral $S_B$, generated by rolling the roller 4 along the defined spiral $S_s$ will always be tangent to a diameter SB of the roller 4. The polar coordinates r and $\phi$ of the point B on the parallel spiral $S_B$ are determined by the geometric relationships:

$$r = \sqrt{(D)^2 + (R)^2 + 2Cos\,\beta\,(D \cdot R)} \qquad (12)$$

$$\phi = \theta + \tan^{-1}\left(\frac{D\,Sin\,\beta}{R - (D\,Cos\,\beta)}\right)$$

or

$$\phi = \theta + \Psi \qquad (13)$$

The relationship between $\beta$, $\eta$, and $\Psi$ can be shown by drawing the line N' parallel to the perpendicular N, through the ordinate O.

$$\eta = \beta - \Psi \qquad (14)$$

In the terminology of the stage-of-the-art one-way clutches, the angles $\beta$ and $\eta$ may be likened to the "strut angle" associated with the individual sprag and roller jamming-elements. Accordingly, the break-out force of the disclosed clutch assemblies will be dependent on the value of these angles. Although either angle $\beta$ or $\eta$ may be kept constant by proper definition of the given spiral $S_s$, both cannot be constant, nor will the strut forces in the roller members be the same. This is obvious when equations (13) and (14) are examined since $\Psi$ varies with R, and from the previous discussion. While the specified spiral $S_s$ and parallel spiral $S_B$ may be interchanged in Figure 9, or the spirals as shown generated independently in relationship to some other defined spiral, their relative relationship as described in equations (10) to (14) will remain unaltered, with the requirement as specified in equation (7) being mandatory on at least one of the roller members to prevent slippage. Once the configuration of the spiral surfaces are defined, the relative strut forces across the roller members are fixed, and the role of change is prevented from playing any part in the distribution of strut forces in the roller members.

Transverse forces through the clutch assemblies have no effect on this locking action, and overrunning frictional wear is not felt on either of the critically shaped spiral surfaces, or the roller members.

The clutch assemblies shown in Figures 1 and 2 are adaptable to a cylindrical shaft (not shown) having a conjugate interference fit with the inner cylindrical surface of their respective outerbody members 11 and 31. When relative counterclockwise rotation of the respective outer body members 11 and 31 takes place, the combination of the rollers 22, 42 and the embodied adjacent spiral surfaces of the inner body members 16, 36 and outer body members 11, 31 force the inner body members 16, 36 to contract radially against the shaft augmenting the small frictional resistance caused by the interference fit, thus restricting anticlockwise rotation to that required to effect clutching. During relative clockwise rotation of the outer body members 11, 31, the frictional resistance between the inner body members 16, 36 and the shaft is limited to that which is caused by the interference fit, which is insufficient to prevent overrunning of the clutch body. Their respective limit spring(s) 18 and 38 limit the relative oscillatory rotation of the inner body members 16, 36 during high overrunning speeds, and assist in maintaining the interference fit between the inner body members 16, 36 and the cylindrical shaft.

The clutch assemblies shown in Figures 3 and 4 are adaptable to a hollow shaft (not shown) having a conjugate interference fit with the cylindrical surface of their respective outer body members 11 and 31. When a relative clockwise rotation of their respective inner body members 16 and 36 takes place, the combination of the rollers 14 and the embodied adjacent spiral surfaces of the outer body members 11, 31 and inner body members 16, 36 force the outer body members 11, 31 to expand radially against the shaft augmenting the small frictional resistance caused by the interference fit, thus restricting clockwise rotation to that required to effect clutching. During relative counterclockwise rotation of the outer body members 11, 31 and inner body members 16, 36, the frictional resistance between the outer body members 11, 31 and the shaft is limited to that which is caused by the interference fit, which again is insufficient to prevent overrunning of the clutch body. Again, their respective limit spring(s) 18 and 38 perform the same tasks as stated in the operation of Figures 1 and 2.

The clutch assemblies shown in Figures 5 and 6 are adaptable to the two concentric, cylindrical clutching members of any clutch installation. Clutching and overrunning action of the slipper members are as defined in the discussion of the clutches of Figures 1 and 2, 3 and 4.

With the spiral type one-way clutch assembly as shown in Figure 7, force F has compressed spring 58 so that the mating conical members are disengaged. Accordingly, the clutch assembly is in the passive mode, and shaft 57 is free to rotate in either direction. As force F decreases, member 56 moves to the active mode. Clockwise rotation (+) of shaft 57 will again be restricted to that required to effect clutching, as previously described in the discussion of the clutch assemblies of Figures 1 and 2. Anticlockwise overrunning of shaft 57 as described above can only be assured by limiting the axial movement of the movable member 56 so that the force on the engaged cones is restricted to that necessary to achieve the same desired interference fit, i.e., the spring force less force F. Effectively, the limit spring(s) must remain open during active mode operation, except during excessive overrunning speed as hereinbefore discussed. The required value of the specified cone angle $\Sigma$ to ensure that movable member 56 will not move towards the passive mode position when the inner body member 16, 36 radially contracts, has the normal relationship to the coefficient of friction $\mu$ between the conical surfaces of the respective members as with any cone clutching device, i.e., tan $\Sigma < \mu$. The clutch assembly shown in Figure 7 does not include the members required to activate and limit the movement of member 56 since it is only the embodiment of a right conical surface on the respective outer members 11 and 31 of the clutching mechanism shown in Figures 1, 2, 5 and 6, that is an embodiment of the invention.

With the spiral type one-way clutch assembly as shown in Figure 8, the respective conical surfaces 70 of the outer body member and 78 of the inner body member are disengaged. The clutch assembly is in the passive mode and shaft 74 is free to rotate in either direction. When movable member 76 is moved axially in the direction of the arrow, conical surfaces 70 and 78 become engaged and the clutch assembly is in the active mode with anticlockwise rotation (−) of shaft 74 restricted, and clockwise rotation (+) unrestricted, as previously described in the discussion of the clutching assemblies of Figures 3 and 4. Again, axial movement of member 76 must be limited so that limit spring(s) remain open during active mode operation as described in the discussion of Figure 7.

## Claims

1. A spiral type one-way clutching mechanism including an annular outer body member (11, 13) having an inner spiral surface (15, 34a) having at least one spiral segment defining an axially oriented opening through the outer body member (11, 31) a concentrically mounted, inner body member (16, 36) having an outer spiral surface (34, 41) having at least one spiral segment, the inner and outer spiral surfaces defining a spiral race (21, 41b) therebetween, the outer body member (11, 31) and the inner body member (16, 36) both being monolithic and being relatively rotatably oscillatable with respect to each other wherein the outer surface of spiral configuration (34, 41) of the inner body member (16, 36) is tangentially congruent to the inner spiral surface (15, 34a) of the outer body member (11, 31) and resilient means are provided (18, 38) for acting between the inner body member (16, 36) and the outer body member (11, 31) for limiting relative oscillatory movement therebetween characterised in that a plurality of axially oriented rollable wedging members (22, 42) contact both the inner and the outer spiral surfaces, one end of said spiral race (34, 41) has an inner abutment provided by a radially outwardly extending protrusion or flange (20, 41a) on said inner body member (16, 36), the other end of said spiral race (21, 41b) defined in part by said inner spiral surface (15, 34a) has an outer abutment provided by a radially inwardly directed protrusion (14, 34b) on said outer body member (11, 31); and said plurality of axially oriented rollable wedging members substantially but not completely fill said spiral race (21, 41b), said roller members are adapted to abut, either directly or via the resilient means (38), said inner abutment (20, 41a) and said outer abutment (14, 34b) when free wheeling; and at least one of the inner body member (16, 36), or the outer body member (11, 31) has a radially directed slit (17, 37) extending therethrough.

2. The spiral type one-way clutching mechanism of claim 1 characterized in that said resilient means comprises a resilient limit spring (18, 38).

3. The spiral type one-way clutching mechanism of claims 1 or 2 characterized in that said rollable wedging members comprise a plurality of axially oriented, abutting roller members (22, 42).

4. The spiral type one-way clutching mechanism of any one of claims 1—3 inclusive, characterized in that (a) said annular outer body member (11, 31) has a cylindrical outer surface (13, 33) provided with a keyway (12, 32) therein; and (b) said inner body member (16, 36) has a radially directed slit (17, 37) extending therethrough.

5. The spiral type one-way clutching mechanism of any one of claims 1—3 inclusive, characterized in that (a) said outer body member (11, 31) has a radially directed slit (17, 37) extending therethrough; and (b) said annular inner body member (16, 36) has a cylindrical inner surface (40) provided with a keyway (12, 32) therein.

6. The spiral type one-way clutching mechanism of any one of claims 1—3 inclusive, characterized in that (a) said outer body member (11, 31) has a radially directed slit (17, 37) extending therethrough; and (b) said inner body member (16, 36) has a radially directed slit (17, 37) extending therethrough.

7. The spiral type one-way clutching mechanism of claims 1, 2 or 3 characterized in that each of said inner and outer spiral surfaces is constituted by a plurality of circumferentially adjacent spiral segments (34a, 41) each segment extending from a zone of maximum radius to a zone of minimum radius, each zone of minimum radius being connected to an adjacent zone of maximum radius by a radially outwardly curved portion (34) of the inner and outer spiral surfaces respectively; and said resilient limit spring means comprises a plurality of axially oriented helical springs (38), each said spring being located in said spiral race (21) and abutting a corresponding pair of facing curved portions (41a, 34b) of said inner and outer surfaces of spiral configuration.

8. The spiral type one-way clutching mechanism of claim 7 characterized in that (a) said outer body member (11, 31) has a cylindrical outer surface (13, 33) provided with a keyway (12, 32) therein; and (b) said inner body member (16, 36) has a radially directed slit (17, 37) extending therethrough.

9. The spiral type one-way clutching mechanism of claim 7 characterized in that (a) said outer body member (11, 31) has a radially directed slit (17, 37) extending therethrough; and (b) said annular inner body member (16, 36) has a cylindrical inner surface (34) provided with a keyway (12, 32) therein.

10. The spiral type one-way clutching mechanism of claim 7 characterized in that (a) said outer body member (11, 31) has a radially directed slit (17, 37) extending therethrough; and (b) said inner body member (16, 36) has a radially directed slit (17, 37) extending therethrough.

11. A spiral type one-way clutching mechanism of claims 4, 5 or 6 characterized in that (a) each of said inner and outer spiral surfaces is constituted by a continuous segment of a spiral (21) extending from a zone of minimum radius to an adjacent zone of maximum radius; (b) said outer body member (11, 31) includes an axially oriented recess (14) in the inner surface thereof adjacent the zone of minimum radius therein; and (c) said resilient limit spring means comprises a generally U-shaped spring (18) received in said recess (14) with one leg thereof (19) contacting said inner body member at the zone of maximum radius thereof (20).

12. A spiral type one-way clutch assembly characterized in that it comprises the spiral type one-way clutching mechanism of claims 1—3 inclusive in combination with

(i) an axially stationary outer frame (51);
(ii) means (52) cooperating with said outer body member (11, 31) of said clutching mechanism for securing said outer body member (11, 31) of said clutching mechanism to said outer frame (51);
(iii) said inner body member (16, 36) of said clutching mechanism having a frusto-conical inner surface (50); and
(iv) a concentrically mounted drive shaft (57) having an axially movable frusto-conical member (56) secured thereto, said frusto-conical member being disposed within said aperture in said inner body member (16, 36) of said clutching mechanism;

said axially movable member (56) being axially movable between a passive position out of engagement with said frusto-conical inner surface (50) of said inner body member (16, 36) of said clutching mechanism, and an active position in engagement with said frusto-conical inner surface (52) of said inner body member (16, 36) of said clutching mechanism.

13. The spiral type one-way clutch assembly of claim 12 characterized in that it comprises spline means (52) cooperating with said keyway (12, 32) in said outer body member (11, 31) of said clutching mechanism for securing said outer body member (11, 31) of said clutching mechanism to said outer frame (51), in combination with the spiral type one-way clutching mechanism of claims 4, 7 or 8.

14. The spiral type one-way clutch assembly of claim 12 characterized in that it comprises securing means (52) for securing said outer body member (11, 31) of said clutching mechanism to said outer frame (51) in combination with the spiral type one-way clutching mechanism of claims 6, 7 or 10.

15. A spiral type one-way clutch assembly characterized in that it comprises the spiral type one-way clutching mecharism of claims 1—3 inclusive in combination with:

(i) an axially stationary inner frame (71) concentrically disposed with respect to said inner body member (16, 36) of said clutching mechanism;
(ii) means (72) cooperating with said inner body member (16, 36) of said clutching mechanism for securing said inner frame member (71) to said inner body member (16, 36) of said clutching mechanism;
(iii) said outer body member (11, 31) of said clutching mechanism having a frusto-conical outer surface (70); and

(iv) a concentrically mounted shaft (74) having an axially movable member (76) secured thereto, said member including a dished face (77) enveloping said outer body member (11, 31) and said dished face (77) having a frusto-conical surface (78) thereon;

said axially movable member (76) being axially movable between a passive position out of engagement with said frusto-conical outer surface (70) of said outer body member (11, 31) of said clutching mechanism, and an active position in engagement with said frusto-conical outer surface (70) of said outer body member (11, 31) of said clutching mechanism.

16. The spiral type one-way clutch assembly of claim 15 characterized in that it comprises spline means (72) cooperating with said keyway (12, 32) of said inner body member (16, 36) of said clutching mechanism for securing said inner frame member (71) to said inner body member (16, 36) of said clutching mechanism, in combination with the spiral type one-way clutching mechanism of claims 5 or 9.

17. The spiral type one-way clutch assembly of claim 15 characterized in that it comprises securing means (72) for securing said inner frame member (71) to said inner body member (16, 36) of said clutching mechanism, in combination with the spiral type one-way clutching mechanism of claims 6, 7 or 10.

## Revendications

1. Mécanisme de roue libre à spirale comprenant un corps extérieur annulaire (11, 31) muni d'une surface de spiral intérieure (15, 34a) comportant au moins un segment de spirale définissant une ouverture orientée axialement, dans le corps extérieur (11, 31), un corps intérieur monté concentriquement (16, 36) muni d'une surface de spirale extérieure (34, 41) comportant au moins un segment de spirale, les surfaces de spirales intérieure et extérieure définissant entre elles un chemin de roulement en spirale (21, 41b), le corps extérieur (11, 31) et le corps intérieur (16, 36) étant l'un et l'autre d'une seule pièce et pouvant effectuer l'un par rapport à l'autre un mouvement d'oscillation en rotation, dans lequel la surface extérieure de la configuration en spirale (34, 41) du corps intérieur (16, 36) est tangentiellement conforme à la surface de spirale intérieure (15, 34a) du corps extérieur (11, 31), et des moyens élastiques étant prévus (18, 38) pour agir entre le corps intérieur (16, 36) et le corps extérieur (11, 31), de manière à limiter le mouvement d'oscillation relative entre eux, mécanisme caractérisé en ce qu'un certain nombre d'éléments de cales roulantes orientés axialement (22, 42) sont en contact à la fois avec la surface de spirale intérieure et avec la surface de spirale extérieure, en ce qu'une extrémité du chemin de roulement en spirale (34, 41) comporte une butée intérieure formée par une protubérance ou rebord (20, 41a) faisant saillie radialement vers l'extérieur, sur le corps intérieur (16, 36); en ce que l'autre extrémité du chemin de roulement en spirale (21, 41b) défini en partie par la surface de spirale intérieure (15, 34a) comporte une butée extérieure constituée par une protubérance (14, 34b) faisant saillie radialement vers l'intérieur, sur le corps extérieur (11, 31); en ce que les différents éléments de cales roulantes orientés axialement, remplissent en grande partie, mais pas complètement, le chemin de roulement en spirale (21, 41b), ces éléments roulants étant destinés à venir buter, soit directement, soit par l'intermédiaire de moyens élastiques (38), contre la butée intérieure (20, 41a) et contre la butée extérieure (14, 34b) lorsqu'on se trouve en roue libre; et en ce que l'une au moins des éléments de corps intérieur (16, 36) ou de corps extérieur (11, 31) est traversé par une fente radiale (17, 37).

2. Mécanisme de roue libre à spirale selon la revendication 1, caractérisé en ce que les moyens élastiques sont constitués par un ressor de tolérance élastique (18, 38).

3. Mécanisme de roue libre à spirale selon l'une quelconque des revendications 1 et 2, caractérisé en ce que les éléments de cales roulantes sont constitués par un certain nombre d'éléments de galets en butée (22, 42) orientés axialement.

4. Mécanisme de roue libre à spirale selon l'une quelconque des revendications 1 à 3, caractérisé en ce que (a) le corps extérieur annulaire (11, 31) présente une surface extérieure cylindrique (13, 33) dans laquelle est ménagé un clavetage, et (b) le corps intérieur (16, 36) est traversé par une fente radiale (17, 37).

5. Mécanisme de roue libre à spirale selon l'une quelconque des revendications 1 à 3, caractérisé en ce que (a) le corps extérieur (11, 31) est traversé par une fente radiale (17, 37), et (b) le corps annulaire intérieur (16, 36) présente une surface intérieure cylindrique (40) dans laquelle est ménagé un clavetage (12, 32).

6. Mécanisme de roue libre à spirale selon l'une quelconque des revendications 1 à 3, caractérisé en ce que (a) le corps extérieur (11, 31) est traversé par une fente radiale (17, 37); et (b) le corps intérieur (16, 36) est traversé par une fente radiale (17, 37).

7. Mécanisme de roue libre à spirale selon l'une quelconque des revendications 1 à 3, caractérisé en ce que chacune des surfaces de spirale intérieure et extérieure est constituée par un certain nombre de segments de spirale circulairement adjacents (34a, 41), chaque segment allant d'une zone de rayon maximum à une zone de rayon minimum, chaque zone de rayon minimum étant reliée à une zone adjacente de rayon maximum, par une section courbée radialement vers l'extérieur (34), des surfaces de spirale intérieure et extérieure respectives; et en ce que les moyens de ressort de tolérance sont constitués par un certain nombre de ressorts hélicoïdaux orientés axialement (38), chacun de ces ressorts étant logé dans le chemin de roulement en spirale (21), et venant buter contre une paire correspondante de sections courbes se faisant face (41a, 34b) de la configuration en spirale des surfaces intérieure et extérieure.

8. Mécanisme de roue libre à spirale selon la revendication 7, caractérisé en ce que (a) le corps extérieur (11, 31) comporte une surface extérieure cylindrique (13, 33) dans laquelle est ménagé un clavetage (12, 32); et (b) le corps intérieur (16, 36) est traversé par une fente radiale (17, 37).

9. Mécanisme de roue libre à spirale selon la revendication 7, caractérisé en ce que (a), le corps extérieur (11, 31) est traversé par une fente radiale (17, 37); et (b) le corps annulaire intérieur (16, 36) présente une surface intérieure cylindrique (34) dans laquelle est ménagé un clavetage (12, 32).

10. Mécanisme de roue libre à spirale selon la revendication 7, caractérisé en ce que (a) le corps extérieur (11, 31) est traversé par une fente radiale (17, 37); et (b) le corps intérieur (16, 36) est traversé par une fente radiale (17, 37).

11. Mécanisme de roue libre à spirale selon l'une quelconque des revendications 4 à 6, caractérisé en ce que (a) chacune des surfaces de spirale intérieure et extérieure est constituée par un segment continu de spirale (21) allant d'une zone de rayon minimum à une zone adjacente de rayon maximum; (b) le corps extérieur (11, 31) comporte, dans sa surface intérieure, une cavité orientée axialement (14) au voisinage de sa zone de rayon minimum, et (c) les moyens de ressort de tolérance élastique sont constitués par une ressort en forme générale de U (18) venant se loger dans la cavité (14) de façon que l'une de ses branches (19) vienne en contact avec le corps intérieur dans sa zone de rayon maximum (20).

12. Assemblage de roue libre à spirale caractérisé en ce qu'il est constitué par le mécanisme de roue libre à spirale selon l'une quelconque des revendications 1 à 3, associé en combinaison avec

(I) un châssis extérieur axialement fixe (51),

(II) des moyens (52) coopérant avec le corps extérieur (11, 31) du mécanisme d'embrayage pour fixer le corps extérieur (11, 31) du mécanisme d'embrayage au châssis extérieur (51);

(III) le corps intérieur (16, 36) du mécanisme d'embrayage comportant une surface intérieure tronconique (50); et

(IV) un arbre d'entraînement monté concentriquement (57) comportant un élément tronconique mobile axialement (56) fixé à celui-ci, cet élément tronconique étant placé à l'intérieur de l'ouverture de l'élément de corps intérieur (16, 36) du mécanisme d'embrayage; cet élément mobile axialement (56) pouvant se déplacer axialement entre une position passive dégagée de la surface intérieure tronconique (50) du corps intérieur (16, 36) du mécanisme d'embrayage et une position active en prise avec la surface intérieure tronconique (52) du corps intérieur (16, 36) du mécanisme d'embrayage.

13. Assemblage de roue libre à spirale selon la revendication 12, caractérisé en ce qu'il comprend des rainures (52) coopérant avec le clavetage (12, 32) du corps extérieur (11, 31) du mécanisme d'embrayage, pour fixer le corps extérieur (11, 31) du mécanisme d'embrayage, au châssis extérieur (51), en combinaison avec le mécanisme de roue libre à spirale selon les revendications 4, 7 ou 8.

14. Assemblage de roue libre à spirale selon la revendication 12, caractérisé en ce qu'il comprend des moyens de fixation (52) destinés à fixer au châssis extérieur (51) le corps extérieur (11, 31) du mécanisme d'embrayage, en combinaison avec le mécanisme de roue libre à spirale selon les revendications 6, 7 ou 10.

15. Assemblage de roue libre à spirale caractérisé en ce qu'il est constitué par le mécanisme de roue libre à spirale selon l'une quelconque des revendications 1 à 3, associé en combinaison avec:

(I) un châssis intérieur axialement fixe (71) monté concentriquement par rapport au corps intérieur (16, 36) du mécanisme d'embrayage,

(II) des moyens (72) coopérant avec le corps intérieur (16, 36) du mécanisme d'embrayage pour fixer le châssis intérieur (71) au corps intérieur (16, 36) du mécanisme d'embrayage,

(III) le corps extérieur (11, 31) du mécanisme d'embrayage comportant une surface extérieure tronconique (70); et

(IV) un arbre monté concentriquement (74) comportant un élément mobile axialement (76) fixé à celui-ci, cet élément comprenant une face en forme de coupelle (77) enveloppant le corps extérieur (11, 31), et cette face en forme de coupelle présentant une surface tronconique (78); l'élément mobile axialement (76) pouvant se déplacer axialement entre une position passive dégagée de la surface extérieure tronconique (70) du corps extérieur (11, 31) du mécanisme d'embrayage, et une position active en prise avec la surface extérieure tronconique (70) du corps extérieur (11, 31) du mécanisme d'embrayage.

16. Assemblage de roue libre à spirale selon la revendication 15, caractérisé en ce qu'il comprend des rainures (72) coopérant avec le clavetage (12, 32) du corps intérieur (16, 36) du mécanisme d'embrayage de manière à fixer l'élément de châssis intérieur (71) au corps intérieur (16, 36) du mécanisme d'embrayage, en combinaison avec le mécanisme de roue libre à spirale des revendications 5 ou 9.

17. Assemblage de roue libre à spirale caractérisé en ce qu'il comprend des moyens de fixation (72) destinés à fixer le châssis (71) au corps intérieur (16, 36) du mécanisme d'embrayage, en combinaison avec le mécanisme de roue libre à spirale selon les revendications 6, 7 ou 10.

**Patentansprüche**

1. Spiralförmiger Freilaufkupplungsmechanismus mit einem ringförmigen äußeren Körperelement (11, 31), welches eine spiralförmige Innenfläche (15, 34a) mit zumindeste einem spiralförmigen Segment aufweist, das eine axial orientierte Öffnung durch das äußere Körperelement (11, 31) definiert, einem konzentrisch montierten inneren Körperelement (16, 36), welches eine spiralförmige Außenfläche (34, 41) mit zumindest einem spiralförmigen Segment aufweist, wobei die spiralförmigen Innen- und Außenflächen zwischen sich einen spiralförmigen Lauf (21, 41b) bilden, das äußere Körperelement (11, 31) und das innere Körperelement (16, 36) beide monolithisch und relativ zueinander oszillierend drehbar sind, wobei die Außenfläche der spiralförmigen Ausbildung (34, 41) des inneren Körperelements (16, 36) tangential kongruent ist mit der spiralförmigen Innenfläche (15, 34a) des äußeren Körperelements (11, 31) und elastische Einrichtungen (18, 38) vorgesehen sind, die zwischen dem inneren Körperelement (16, 36) und dem äußeren Körperelement (11, 31) wirksam sind zur Begrenzung der relativen Schwingungsbewegung zwischen den Elemente, dadurch gekennzeichnet, daß eine Vielzahl von axial orientiert rollbaren Klemmkörpern (22, 42) sowohl die spiralförmige Innenfläche als auch spiralförmige Außenfläche berührt, wobei ein Ende des spiralförmigen Laufs (34, 41) ein inneres Widerlager aufweist, das durch einen sich radial nach außen erstreckenden Vorsprung oder Flansch (20, 41a) an dem inneren Körperelement (16, 36) gebildet wird, während das andere Ende des spiralförmigen Laufs (21, 41b), der zum Teil durch die spiralförmige Innenfläche (15, 34a) definiert ist, ein äußeres Widerlager aufweist, das durch einen radial nach innen gerichteten Vorsprung (14, 34b) an dem äußeren Körperelement (11, 31) gebildet wird, und daß die Vielzahl von axial orientiert rollbaren Klemmkörpern den spiralförmigen Lauf (21, 41b) im wesentlichen, jedoch nicht vollständig ausfüllen, wobei die Rollkörper so ausgelegt sind, daß diese bei freiem Lauf entweder direkt oder über elastische Einrichtungen (38) an dem inneren Widerlager (20, 41a) und äußeren Widerlager (14, 34b) gegengelagert sind, und daß zumindest eines, nämlich das innere Körperelement (16, 36) oder das äußere Körperelement (11, 31) einen sich dadurch erstreckenden, radial gerichteten Schlitz (17, 37) aufweist.

2. Spiralförmiger Freilaufkupplungsmechanismus nach Anspruch 1, dadurch gekennzeichnet, daß die elastische Einrichtung in Form einer elastischen Begrenzungsfeder (18, 38) vorgesehen ist.

3. Spiralförmiger Freilaufkupplungsmechanismus nach einem der Ansprüche 1 oder 2, dadurch gekennzeichnet, daß die rollbaren Klemmkörper eine Vielzahl von axial orientierten, aneinander anliegenden Rollelementen (22, 42) aufweisen.

4. Spiralförmiger Freilaufkupplungsmechanismus nach einem der Ansprüche 1 bis 3, dadurch gekennzeichnet, daß (a) das ringförmige äußere Körperelement (11, 31) eine zylinderförmige Außenfläche (13, 33) mit einer darin ausgebildeten Keilnut (12, 32) und (b) das innere Körperelement (16, 36) einen sich durch diese erstreckenden, radial gerichteten Schlitz (17, 37) aufweist.

5. Spiralförmiger Freilaufkupplungsmechanismus nach einem der Ansprüche 1 bis 3, dadurch gekennzeichnet, daß (a) das äußere Körperelement (11, 31) einen sich durch diese erstreckenden, radial gerichteten Schlitz (17, 37) und (b) das ringförmige innere Körperelement (16, 36) eine zylinderförmige Innenfläche (40) mit einer darin ausgebildeten Keilnut (12, 32) aufweist.

6. Spiralförmiger Freilaufkupplungsmechanismus nach einem der Ansprüche 1 bis 3, dadurch gekennzeichnet, daß (a) das äußere Körperelement (11, 31) einen sich durch dieses erstreckenden, radial gerichteten Schlitz (17, 37) und (b) das innere Körperelement (16, 36) einen sich durch dieses erstreckenden, radial gerichteten Schlitz (17, 37) aufweist.

7. Spiralförmiger Freilaufkupplungsmechanismus nach einem der Ansprüche 1, 2 oder 3, dadurch gekennzeichnet, daß jede der inneren und äußeren spiralförmigen Oberflächen durch eine Vielzahl von in Umfangsrichtung aneinander angrenzenden spiralförmigen Segmenten (34a, 41) gebildet wird, deren jedes sich von einer Zone von maximalem Radius zu einer Zone von minimalem Radius erstreckt, wobei jede Zone von minimalem Radius durch einen radial nach außen gebogenen Bereich (34) jeweils der inneren und äußeren spiralförmigen Oberflächen an eine Zone von maximalem Radius angeschlossen ist, und daß die elastischen Begrenzungsfedereinrichtungen eine Vielzahl von axial orientierten schraubenförmigen Federn (38) aufweisen, deren jede in dem spiralförmigen Lauf (21) angeordnet ist und an einem entsprechenden Paar einander zugewandter gebogener Bereiche (41a, 34b) der spiralförmig ausgebildeten inneren und äußeren Oberflächen anliegt.

8. Spiralförmiger Freilaufkupplungsmechanismus nach Anspruch 7, dadurch gekennzeichnet, daß (a) das äußere Körperelement (11, 31) eine zylinderförmige Außenfläche (13, 33) mit einer darin ausgebildeten Keilnut (12, 32) und (b) das innere Körperelement (16, 36) einen sich durch diese erstreckenden, radial gerichteten Schlitz (17, 37) aufweist.

9. Spiralförmiger Freilaufkupplungsmechanismus nach Anspruch 7, dadurch gekennzeichnet, daß (a) das äußere Körperelement (11, 31) einen sich durch dieses erstreckenden, radial gerichteten Schlitz (17, 37) und (b) das ringförmige innere Körperelement (16, 36) eine zylinderförmige Innenfläche (34) mit einer darin ausgebildeten Keilnut (12, 32) aufweist.

10. Spiralförmiger Freilaufkupplungsmechanismus nach Anspruch 7, dadurch gekennzeichnet, daß (a) das äußere Körperelement (11, 31) einen sich durch diese erstreckenden, radial gerichteten Schlitz (17, 37) und (b) das innere Körperelement (16, 36) einen sich durch dieses erstreckenden, radial gerichteten Schlitz (17, 37) aufweist.

11. Spiralförmiger Freilaufkupplungsmechanismus nach den Ansprüchen 4, 5 oder 6, dadurch gekennzeichnet, daß (a) jede der inneren und äußeren spiralförmigen Oberflächen durch ein kontinuierliches Segment einer Spirale (21) gebildet wird, das sich von einer Zone von minimalem Radius zu einer angrenzenden Zone von maximalem Radius erstreckt, (b) daß das äußere Körperelement (11, 31) eine axial orientierte Ausnehmung (14) in dessen Innenfläche angrenzend an die Zone von minimalem Radius aufweist und (c) daß die elastische Begrenzungsfedereinrichtung eine im allgemeinen U-förmig ausgebildete Feder (18) aufweist, die in der Ausnehmung (14) aufgenommen wird, wobei ein Schenkel (19) der Feder das innere Körperteil an der Zone des maximalen Radius (20) desselben berührt.

12. Spiralförmige Freilaufkupplungsanordnung, dadurch gekennzeichnet, daß diese den spiralförmigen Freilaufkupplungsmechanismus nach den Ansprüchen 1 bis 3 aufweist, und zwar in Kombination mit (i) einem axial ortsfesten äußeren Rahmen (51), (ii) einer mit dem äußeren Körperelement (11, 31) des Kupplungsmechanismus zusammenwirkenden Einrichtung (52) für die Befestigung des äußeren Körperelements (11, 31) des Kupplungsmechanismus an dem äußeren Rahmen (51), (iii) dem inneren Körperelement (16, 36) des Kupplungsmechanismus, das einen kegelstumpfförmige Innenfläche (50) aufweist, und (iv) einer konzentrisch montierten Antriebswelle (57), an welcher ein kegelstumpfförmig ausgebildetes, bewegliches Element (56) befestigt ist, welches in der in dem inneren Körperelement (16, 36) des Kupplungsmechanismus ausgebildeten Öffnung angeordnet ist, wobei das bewegliche Element (56) axial hin- und herbegwegbar ist zwischen einer passiven Position, nämlich gelöst von der kegelstumpfförmig ausgebildeten Innenfläche (50) des inneren Körperelements (16, 36) des Kupplungsmechanismus, und einer aktiven Position, nämlich angreifend an der kegelstumpfförmig ausgebildeten Innenfläche (52) des inneren Körperelements (16, 36) des Kupplungsmechanismus.

13. Spiralförmige Freilaufkupplungsanordnung nach Anspruch 12, dadurch gekennzeichnet, daß eine Keileinrichtung (52) vorgesehen ist, die zur Festlegung des äußeren Körperelements (11, 31) des Kupplungsmechanismus an dem äußeren Rahmen (51) mit der Keilnut (12, 32) in dem äußeren Körperelement (11, 31) des Kupplungsmechanismus zusammenwirkt, und zwar in Kombination mit dem spiralförmigen Freilaufkupplungsmechanismus nach den Ansprüchen 4, 7 oder 8.

14. Spiralförmige Freilaufkupplungsanordnung nach Anspruch 12, dadurch gekennzeichnet, daß eine Befestigungseinrichtung (52) zur Festlegung des äußeren Körperelements (11, 31) des Kupplungsmechanismus an dem äußeren Rahmen (51) vorgesehen ist, und zwar in Kombination mit dem spiralförmigen Freilaufkupplungsmechanismus nach den Ansprüchen 6, 7 oder 10.

15. Spiralförmige Freilaufkupplungsanordnung, dadurch gekennzeichnet, daß diese den spiralförmigen Freilaufkupplungsmechanismus nach den Ansprüchen 1 bis 3 aufweist, und zwar in Kombination mit (i) einem axial ortsfesten inneren Rahmen (71), der mit Hinblick auf das innere Körperelement (16, 36) des Kupplungsmechanismus konzentrisch angeordnet ist, (ii) einer mit dem inneren Körperelement (16, 36) des Kupplungsmechanismus zusammenwirkenden Einrichtung (72) für die Befestigung des inneren Rahmenelements (71) an dem inneren Körperelement (16, 36) des Kupplungsmechanismus, (iii) dem äußeren Körperelement (11, 31) des Kupplungsmechanismus, das eine kegelstumpfförmige Außenfläche (70) aufweist und (iv) einer konzentrisch montierten Welle (74), an welcher ein axial bewegbares Element (76) befestigt ist, welches eine das äußere Körperelement umgebende schüsselförmige Fläche (77) aufweist, auf welcher eine kegelstumpfförmige Oberfläche (78) ausgebildet ist, wobei das axial bewegbare Element (76) axial hin- und herbewegbar ist zwischen einer passiven Position, nämlich gelöst von der kegelstumpfförmigen Außenfläche (70) des äußeren Körperelements (11, 31) des Kupplungsmechanismus, und einer aktiven Position, nämlich angreifend an der kegelstumpfförmigen Außenfläche (70) des äußeren Körperelements (11, 31) des Kupplungsmechanismus.

16. Spiralförmige Freilaufkupplungsanordnung nach Anspruch 15, dadurch gekennzeichnet, daß eine Keileinrichtung (72) vorgesehen ist, die zur Festlegung des inneren Rahmenelements (71) an dem inneren Körperelement (16, 36) des Kupplungsmechanismus mit der Keilnut (12, 32) des inneren Körperelements (16, 36) des Kupplungsmechanismus zusammenwirkt, und zwar in Kombination mit dem spiralförmigen Freilaufkupplungsmechanismus nach den Ansprüchen 5 oder 9.

17. Spiralförmige Freilaufkupplungsanordnung nach Anspruch 15, dadurch gekennzeichnet, daß eine Befestigungseinrichtung (72) zur Festlegung des inneren Rahmenelements (71) an dem inneren Körperelement (16, 36) des Kupplungsmechanismus vorgesehen ist, und zwar in Kombination mit dem spiralförmigen Freilaufkupplungsmechanismus nach den Ansprüchen 6, 7 oder 10.

FIG.1

FIG. 2

FIG.3

FIG.4

FIG.5

FIG.6

FIG.7

FIG.8

FIG. 9